# EUROPEAN PATENT APPLICATION

(11) **EP 2 793 049 A1**
(43) Date of publication of application: **22.10.2014**
(21) Application number: 12857176.7
(22) Date of filing: 20.11.2012
(51) Int. Cl.: G01S 19/34, G01C 21/28, G01S 19/48, H04M 1/00, H04M 1/725, H04W 64/00

(54) **MOBILE TERMINAL AND METHOD**

(30) Priority: 15.12.2011 JP 2011275054
(71) Applicant: NTT DOCOMO, INC., Chiyoda-ku Tokyo 100-6150 (JP)
(72) Inventor: TAKAHASHI, Makoto, Tokyo 1006150 (JP)
(74) Representative: Maury, Richard Philip
(86) International application number: PCT/JP2012/080096
(87) International publication number: WO 2013/088924

(57) **Abstract**

One aspect of the present invention relates to a mobile terminal having a positioning function, comprising: a GPS positioning unit configured to perform GPS based positioning to obtain a positioning result including a position of the mobile terminal and a measurement status regarding the GPS based positioning; a base station based positioning unit configured to perform base station based positioning to obtain a positioning result including a position of the mobile terminal and a measurement status regarding the base station based positioning; a historical positional information storage unit configured to store historical positional information including the positioning results obtained by the GPS based positioning unit and the base station based positioning unit; and a positioning determination unit configured to determine whether a valid positioning result regarding a camped base station of the mobile terminal is in the historical positional information, wherein when positioning is performed for the mobile terminal in response to activation of the positioning function, prior to activation of the GPS based positioning and the base station based positioning, the positioning determination unit identifies the camped base station of the mobile terminal, identifies positioning results regarding the identified base station in the historical positional information, detects a valid positioning result from the identified positioning results based on the measurement status of the identified positioning results and provides the detected positioning result as the positioning result for the mobile terminal.

## Description

### TECHNICAL FIELD

The present invention relates to a mobile terminal having a periodic positioning function.

### BACKGROUND ART

In current mobile communication systems, an auto-GPS (Global Positioning System) function for measuring the position of a mobile terminal periodically and automatically is available. In a typical auto-GPS function, a GPS system and a base station is used to measure the position of a mobile terminal periodically and automatically, and the measured positional information of the mobile terminal is transmitted to service providers such as a content provider and a network operator. The service providers can provide the mobile terminal with various services using the received positional information of the mobile terminal. Some examples of the services may include services for distributing pinpoint weather information or event information around the mobile terminal in a push manner, an activity-assisted type of service for providing last train information for the nearest train station and so on.

For a mobile terminal having a periodic positioning function such as the above-stated auto-GPS function, it is increasingly important to design a positioning system that can achieve power saving. For this power saving, a mobile terminal employing "immobility determination" based on an accelerometer or base station area information is proposed. Specifically, periodic positioning is performed only if it is determined that a mobile terminal is currently moving based on a detection result of motion detection devices such as an accelerometer sensor, the base station area information or others. It is possible to avoid unnecessary execution of the periodic positioning by using the immobility determination when the mobile terminal remains still, which can reduce unnecessary power consumption.

For the immobility determination, see JP 2009-135915 and JP 2006-153695, for example.

### SUMMARY OF INVENTION

### [PROBLEM TO BE SOLVED BY THE INVENTION]

However, even if the immobility determination is utilized, there is a possibility that the mobile terminal may perform unnecessary GPS based positioning. For example, even if it is determined that the mobile terminal is currently moving in an area where the GPS based positioning is unavailable such as a platform in a subway station or an indoor environment, there is a problem where the mobile terminal may potentially perform the GPS based positioning. In this case, the mobile terminal would keep performing the GPS based positioning for a predefined period and would not initiate the base station based positioning until the GPS based positioning has timed out, which may consume unnecessary power and cause traffic load such as utilization of network facilities associated with the base station based positioning.

In order to address the above problems, one object of the present invention is to provide a mobile terminal and a method that can provide valid positioning results while reducing unnecessary GPS based positioning and base station based positioning.

### [MEANS FOR SOLVING THE PROBLEM]

In order to overcome the above object, one aspect of the present invention relates to a mobile terminal having a positioning function, comprising: a GPS positioning unit configured to perform GPS based positioning to obtain a positioning result including a position of the mobile terminal and a measurement status regarding the GPS based positioning; a base station based positioning unit configured to perform base station based positioning to obtain a positioning result including a position of the mobile terminal and a measurement status regarding the base station based positioning; a historical positional information storage unit configured to store historical positional information including the positioning results obtained by the GPS based positioning unit and the base station based positioning unit; and a positioning determination unit configured to determine whether a valid positioning result regarding a camped base station of the mobile terminal is in the historical positional information, wherein when positioning is performed for the mobile terminal in response to activation of the positioning function, prior to activation of the GPS based positioning and the base station based positioning, the positioning determination unit identifies the camped base station of the mobile terminal, identifies positioning results regarding the identified base station in the historical positional information, detects a valid positioning result from the identified positioning results based on the measurement status of the identified positioning results and provides the detected positioning result as the positioning result for the mobile terminal.

Another aspect of the present invention relates to a method for performing a positioning function in a mobile terminal, wherein the mobile terminal includes historical positional information for recording a positioning result including a position of the mobile terminal obtained through previous positioning and a measurement status regarding the positioning, the method comprising: activating the positioning function in response to an occurrence of a predefined event; identifying a camped base station of the mobile terminal; identifying positioning results regarding the identified base station in the historical positional information; detecting a valid positioning result from the identified positioning results based on the measurement status of the identified positioning results; and outputting the detected positioning result as the positioning result for the mobile terminal.

### [ADVANTAGE OF THE INVENTION]

According to the present invention, it is possible to provide a mobile terminal and a method that can provide valid positioning results while reducing unnecessary GPS based positioning and base station based positioning.

### BRIEF DESCRIPTION OF DRAWINGS

FIG. 1 schematically illustrates a concept of the present invention;
FIG. 2 illustrates an arrangement of a positioning system according to one embodiment of the present invention;
FIG. 3 illustrates an arrangement of a mobile terminal according to one embodiment of the present invention;
FIG. 4 illustrates a data structure of historical positional information according to one embodiment of the present invention; and
FIG. 5 is a flow diagram for illustrating periodic positioning by a mobile terminal according to one embodiment of the present invention.

### EMBODIMENTS FOR CARRYING OUT THE INVENTION

Embodiments of the present invention are described below with reference to drawings.

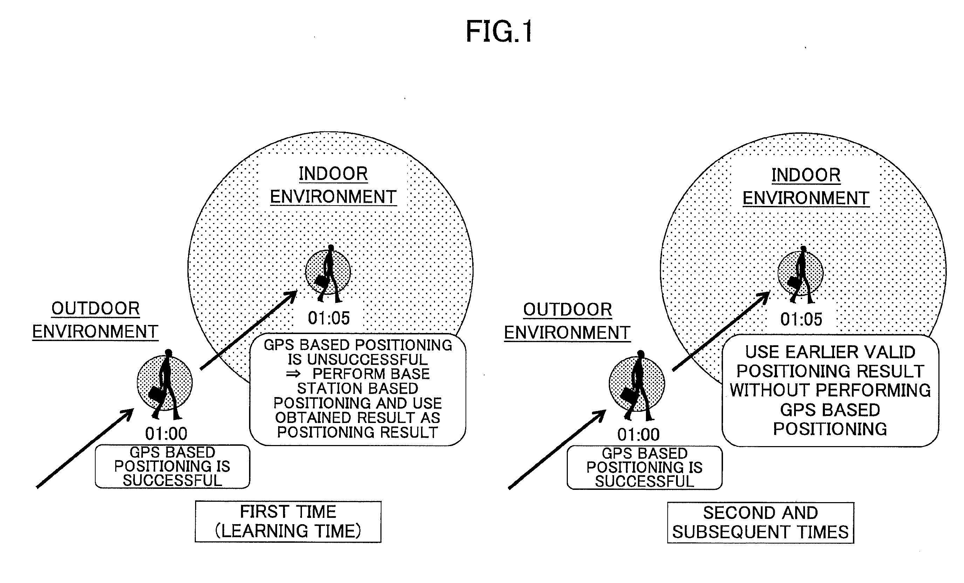

In embodiments of the present invention, a mobile terminal having a positioning function such as an auto-GPS based positioning is disclosed. In embodiments below, the mobile terminal uses a previous valid positioning result for a camped base station area for reduction of unnecessary positioning. Specifically, before a mobile terminal performs the GPS based positioning and the base station based positioning in periodic positioning, the mobile terminal determines whether a valid positioning result among previously obtained positioning results is available as a positioning result for the current positioning based on a measurement timing, a measurement type, measurement accuracy and/or a measurement point of the previously obtained positioning results. If some valid positioning results are detected, the mobile terminal uses the detected valid positioning results as the current positioning result without performing the GPS based positioning and the base station based positioning. In an example as illustrated in FIG. 1, when a mobile terminal moving into an indoor environment has failed the GPS based positioning, the mobile terminal then performs the base station based positioning to obtain a positioning result. According to the present invention, the mobile terminal stores the obtained positioning result. When the mobile terminal moves into the indoor environment in the second and subsequent periodic positioning occasions, the mobile terminal uses the previously stored positioning result without performing the GPS based positioning. As a result, compared to conventional auto-GPS where unsuccessful GPS based positioning may be repeated, it is possible to use the previous valid positioning result to avoid operational load required to perform the GPS based positioning and the base station based positioning again while maintaining quality of the positioning result.

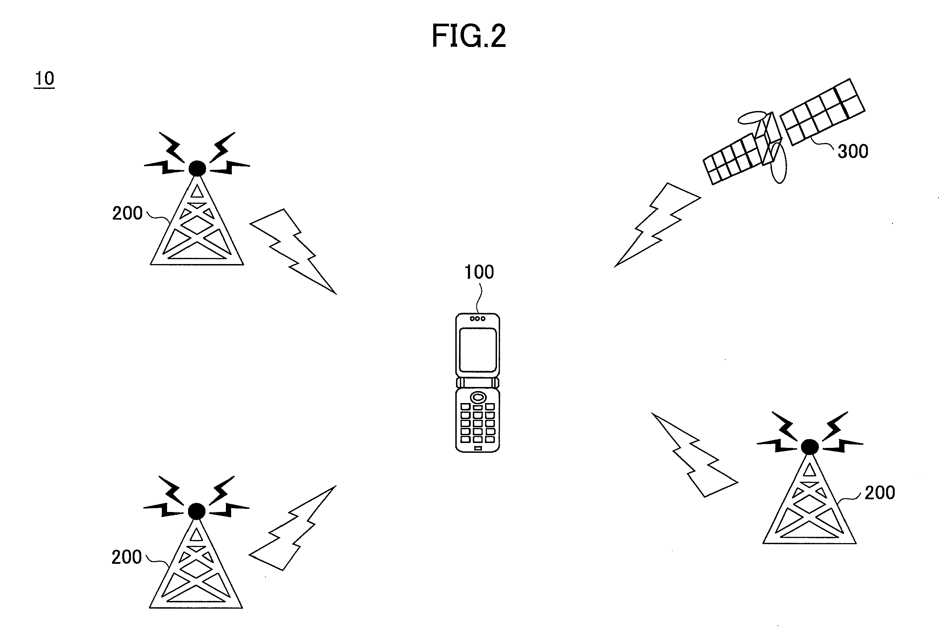

First, a positioning system according to one embodiment of the present invention is described with reference to FIG. 2. FIG. 2 illustrates an arrangement of a positioning system according to one embodiment of the present invention.

As illustrated in FIG. 2, a positioning system 10 includes a mobile terminal 100, base stations 200 and a GPS satellite 300. In the illustrated embodiment, one mobile terminal 100, three base stations 200 and one GPS satellite 300 are illustrated, but the positioning system 10 may typically have any number of mobile terminals 100, base stations 200 and GPS satellites 300.

The mobile terminal 100 is wirelessly connected to the base stations 200 to exchange various signals such as a data signal and a control signal.

In this embodiment, the mobile terminal 100 estimates the position of the mobile terminal 100 through wireless communication to the base stations 200 (base station based positioning). Typically, the mobile terminal 100 can measure the position of the mobile terminal 100 based on the strength of signals received from the base station 200. Preferably, the mobile terminal 100 may measure the position of the mobile terminal 100 based on the strength of signals received from multiple base stations 200 in order to improve measurement accuracy.

In this embodiment, the mobile terminal 100 further estimates the position of the mobile terminal 100 based on GPS signals received from the GPS satellite 300 (GPS based positioning). Typically, the mobile terminal 100 receives GPS signals from three or more GPS satellites 300 and uses any known GPS positioning method to determine the position of the mobile terminal 100 based on the received GPS signals. In general, it is known that even if any of the GPS based positioning or the base station based positioning is employed, there may arise an error between the positioning result and the actual position of the mobile terminal 100. However, the GPS based positioning can determine the position of the mobile terminal 100 with a higher accuracy than the base station based positioning. On the other hand, the GPS based positioning cannot be utilized in areas where GPS signals cannot be successfully received such as an indoor environment.

The base station 200 is wirelessly connected to the mobile terminal 100 to exchange various signals such as a data signal and a control signal. For example, in response to a data transmit request from the mobile terminal 100, the base station 200 obtains data from a server or others on a connecting network and transmits the obtained data to the mobile terminal 100 in a data signal. In a typical position related service, the mobile terminal 100 transmits measured positional information of the mobile terminal 100 to the base station 200. In turn, the base station 200 transmits the positional information received from the mobile terminal 100 to content provider's server and receives content data generated based on the positional information from the server. Then, the base station 200 transmits the received content data to the mobile terminal 100 in a data signal. Furthermore, the base station 200 transmits various control information required for wireless communications to the mobile terminal 100 in a control signal to the mobile terminal 100. For example, the control information may include a cell ID for identifying a cell served by the base station 200.

The GPS satellite 300 goes around the earth's orbit and distributes signals over the earth including time data from an installed clock. The mobile terminal 100 can derive the distance to the GPS satellite 300 by multiplying a difference between a transmit time and a receive time of the time data received from the GPS satellite 300 with a predefined radio wave travelling speed. In principle, the mobile terminal 100 can derive the position of the mobile terminal 100 by deriving the distances from at least three GPS satellites 300.

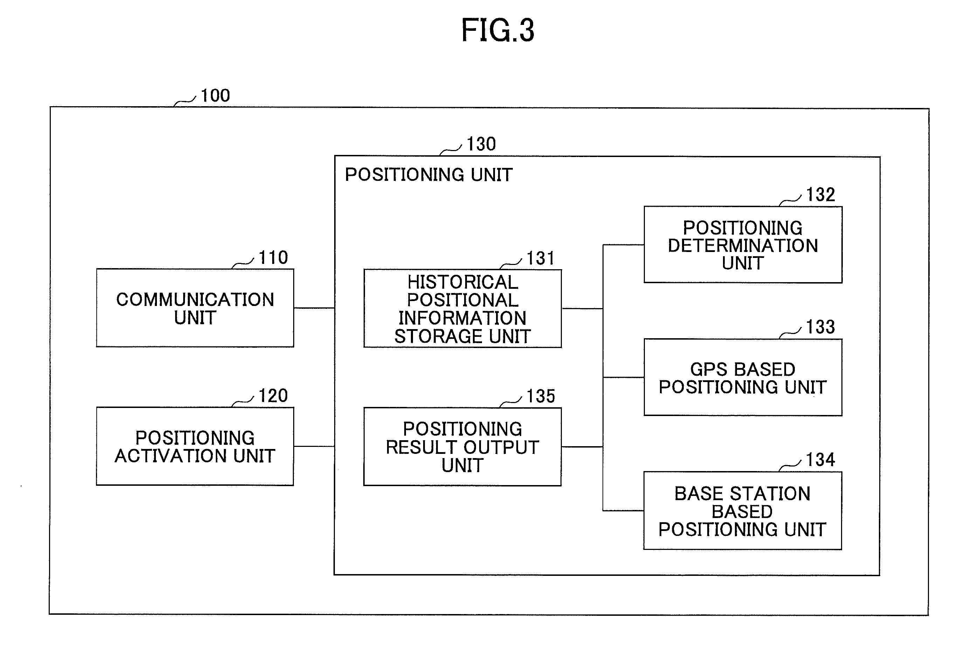

Next, an arrangement of a mobile terminal according to one embodiment of the present invention is described with reference to FIG. 3.

The mobile terminal 100 according to this embodiment is a GPS function installed apparatus and may be typically a mobile phone, a smart phone and so on. Typically, the mobile terminal 100 is composed of one or more of various hardware resources such as an auxiliary storage device, a memory device, a CPU (Central Processing Unit), a communication device, a display device, an input device, a GPS device, a measurement device, a timer and others. The auxiliary storage device is composed of a hard disk, a flash memory or others and stores programs and data to implement various operations as stated below. The memory device is composed of a RAM (Random Access Memory) or others and in response to an activation instruction of a program, reads the program from the auxiliary storage device and stores the program. The CPU serves as a processor for processing information and implements various operations as stated below in accordance with programs stored in the memory device. The communication device is composed of various communication circuits for connecting to other devices such as a server via a network in a wired or wireless manner. The display device is composed of a display and displays received contents via the network, a programmed GUI (Graphical User Interface) and so on. The input device is typically composed of operational buttons, a keyboard, a mouse and so on and is used for a user of the mobile terminal 100 to input various operation commands. In order to implement the GPS function, the GPS device includes a receive circuit for receiving signals distributed from the GPS satellite 300 and extracting time data, a positioning circuit for measuring the position of the mobile terminal 100 from the received time data in accordance with any appropriate GPS positioning method and so on. The measurement device is composed of various sensors such as an accelerometer for measuring movement of the mobile terminal 100. The timer provides time data to components in the mobile terminal 100. It is preferred that the timer has a periodic time correction function. Note that the mobile terminal according to the present invention is not limited to the above-stated hardware arrangement and may have any other appropriate hardware arrangement such as circuits that can implement various functions as stated below.

FIG. 3 illustrates an arrangement of a mobile terminal according to one embodiment of the present invention. As illustrated in FIG. 3, the mobile terminal 100 includes a communication unit 110, a positioning activation unit 120 and a positioning unit 130.

The communication unit 110 is in wireless communication with the base station 200 and transmits and receives various signals such as a data signal and a control signal. In this embodiment, the communication unit 110 extracts base station identification information such as a cell ID for identifying a serving cell of the base station 200 from a control signal received from the base station 200. The communication unit 110 supplies the extracted cell ID to the positioning unit 130. The communication unit 110 may receive control signals from the base station 200 serving the camped cell as well as one or more adjacent base stations 200 disposed near the camped cell and then extract the cell IDs of the camped cell and the adjacent cells from the received control signals. Also, the communication unit 110 receives positional information on the mobile terminal 100 obtained by using the supplied cell IDs from the positioning unit 130. The communication unit 110 transmits the received positional information to the base station 200.

The positioning activation unit 120 activates the positioning unit 130 in response to an occurrence of a predefined event. In one embodiment, in order to perform the periodic positioning, the positioning activation unit 120 periodically activates the positioning unit 130 at a predefined time interval to cause the positioning unit 130 to periodically measure the position of the mobile terminal 100 at that time interval. For example, the time interval may be set to an appropriate period such as five minutes or may be set by a service provider depending on types of provided position related services. For example, the time interval may be set depending on the size of geographical areas targeted by the position related services. In other words, for the position related services for providing content data generated for a relatively wide geographical area such as weather information, the service provider may set a relatively long time interval. On the other hand, for the position related services for providing content data focused on a relatively narrow geographical area such as nearby shop information, the service provider may set a relatively short time interval.

In other embodiments, the positioning activation unit 120 may include a motion detection device for detecting motion of the mobile terminal 100 such as an accelerometer sensor to activate the positioning unit 130 based on immobility determination using the motion detection device. In other words, only if it is detected that the mobile terminal 100 is currently moving, the positioning activation unit 120 may activate the periodic positioning. In this case, when it is detected that the mobile terminal 100 is currently moving, the positioning activation unit 120 activates the positioning unit 130 periodically at a predefined time interval to cause the positioning unit 130 to measure the position of the currently moving mobile terminal 100. Then, when the motion detection device detects that the mobile terminal 100 remains still for longer than or equal to a predefined threshold time, the positioning activation unit 120 instructs the positioning unit 130 to stop the periodic positioning. In this manner, unnecessary positioning can be avoided for the stationary mobile terminal 100, which can save power consumption.

In still other embodiments, the positioning activation unit 120 may activate the positioning unit 130 based on the immobility determination using base station area information such as a camped cell ID obtained from the base station 200. Specifically, in response to a new camped cell ID being obtained from a destination serving base station 200 through travelling of the mobile terminal 100, the positioning activation unit 120 may activate the periodic positioning. In this case, the positioning activation unit 120 may activate the positioning unit 130 at a predefined time interval to cause the positioning unit 130 to periodically measure the position of the currently moving mobile terminal 100. Then, in response to the camped cell ID being kept unchanged for longer than or equal to a predefined threshold time, the positioning activation unit 120 instructs the positioning unit 130 to stop the periodic positioning. In this manner, unnecessary positioning can be avoided for the stationary mobile terminal 100, which can save power consumption.

Also, the positioning activation unit 120 may use the detection result from the motion detection device together with the change in the camped cell ID to activate or deactivate the positioning unit 130.

The positioning unit 130 uses cell information from the communication unit 110 such as a cell ID to perform the periodic positioning in response to an activation instruction from the positioning activation unit 120. The positioning unit 130 includes a historical positional information storage unit 131, a positioning determination unit 132, a GPS based positioning unit 133, a base station based positioning unit 134 and a positioning result output unit 135.

The historical positional information storage unit 131 stores historical positional information including positioning results obtained from the GPS based positioning unit 133 and the base station based positioning unit 134. Specifically, the historical positional information storage unit 131 stores the historical positional information for recording positioning results of the mobile terminal 100 obtained within a predefined period. For each positioning occasion in the GPS based positioning unit 133 and the base station based positioning unit 134, the obtained positioning result is recorded in the historical positional information. In one embodiment, each positioning result includes positional information obtained through the positioning as well as measurement status information regarding the situation where the positioning has been performed. For example, the measurement status information may include information elements such as a positioning timing, a positioning type, positioning accuracy and a positioning point.

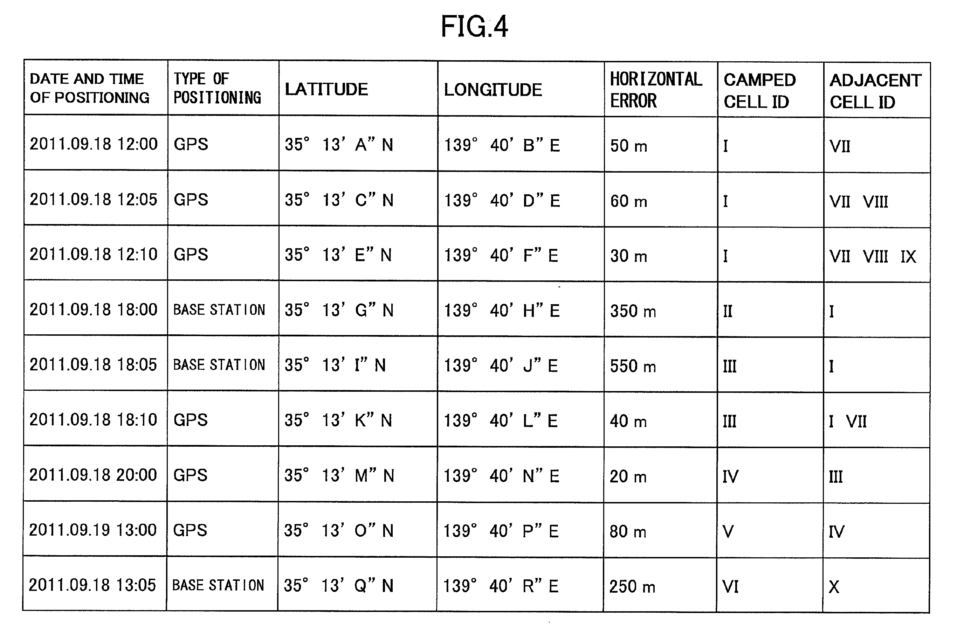

In one embodiment, the historical positional information includes a data structure as illustrated in FIG. 4. Specifically, the historical positional information consists of data items "date and time of positioning", "type of positioning", "latitude", "longitude", "horizontal error", "camped cell ID" and "adjacent cell ID", and previously obtained positioning results are recorded in a form of these data items. The data item "data and time of positioning" indicates the date and time of execution of the positioning. The data item "type of positioning" indicates which the GPS based positioning or the base station based positioning had been performed. The data items "latitude" and "longitude" indicate the latitude and the longitude, respectively, of the measured position of the mobile terminal 100. The data item "horizontal error" indicates an estimated horizontal error between the positioning result and the actual position. In general, it is known that the GPS based positioning leads to an error smaller than the base station based positioning. The data item "camped cell ID" indicates an identifier for identifying the camped cell of the mobile terminal 100 at execution timing of the positioning. The data item "adjacent cell ID" indicates an identifier for identifying one or more cells adjacent to the camped cell of the mobile terminal 100 at the execution timing of the positioning. Among these data items, "latitude" and "longitude" correspond to the positional information, and "date and time of positioning", "type of positioning", "horizontal error", "camped cell ID" and "adjacent cell ID" correspond to the measurement status information. Also, "date and time of positioning" is an data item regarding the positioning timing, "type of positioning" is a data item regarding the positioning type, "horizontal error" is a data item regarding the positioning accuracy, and "camped cell ID" and "adjacent cell ID" are data items regarding the positioning point. The above data items are merely one example, and the positioning result according to the present invention is not limited to them.

When the positioning is performed in the mobile terminal 100 in response to an activation instruction from the positioning activation unit 120, the positioning determination unit 132 identifies the camped base station 200 of the mobile terminal before activating the GSP based positioning unit 133 and the base station based positioning unit 134. In addition, the positioning determination unit 132 identifies positioning results in the historical positional information regarding the identified base station 200, detects a valid positioning result from the identified positioning results based on the measurement status of the identified positioning results, and provides the positioning result output unit 135 with the detected positioning result as the positioning result for the mobile terminal 100. Specifically, the positioning determination unit 132 searches the historical positional information for positioning results obtained for a predefined period (for example, recent within one week) and detects a positioning result corresponding to the camped cell ID received from the communication unit 110. If the positioning result corresponding to the received camped cell ID has not been detected, the positioning determination unit 132 instructs the GPS based positioning unit 133 to perform the GPS based positioning. On the other hand, if the positioning result corresponding to the received camped cell ID is detected, the positioning determination unit 132 determines validity of the detected positioning result by further determining the positioning accuracy and/or the positioning type of the detected positioning result.

The positioning accuracy may be determined based on the data item "horizontal error" related to the positioning accuracy, for example. Specifically, the positioning determination unit 132 determines whether "horizontal error" of the detected positioning result is less than or equal to a predefined threshold, and if "horizontal error" is less than or equal to the predefined threshold, determines that the positioning result has better positioning accuracy and is valid accordingly. On the other hand, if "horizontal error" is greater than the predefined threshold, the positioning determination unit 132 determines that the positioning result has insufficient positioning accuracy and is not valid accordingly. The error threshold may be set to an appropriate length such as 50 meters or may be set by service providers depending on types of provided position related services. For example, the error threshold may be set depending on the size of geographical areas targeted by the position related services . Specifically, for the position related services for providing content data generated for a relatively large geographical area such as weather information, the service provider may set a relatively large error threshold. On the other hand, for the position related services for providing content data focused on a relatively small geographical area such as nearby shop information, the service provider may set a relatively small error threshold.

Also, the validity determination for the positioning result may be made based on the data item "type of positioning" related to the positioning type. Specifically, the positioning determination unit 132 may determine whether the detected positioning result has been obtained through the GPS based positioning or the base station based positioning. If the detected positioning result has been obtained through the GPS based positioning, the positioning determination unit 132 may determine that the positioning result is valid. On the other hand, if the detected positioning result has been obtained through the base station based positioning, the positioning determination unit 132 may determine that the positioning result is not valid.

The positioning determination unit 132 provides the positioning result output unit 135 with the positioning result determined as being valid as the positioning result of the current positioning. If multiple positioning results are determined to be valid, the positioning determination unit 132 may provide the positioning result output unit 135 with the positioning result having the smallest "horizontal error". In general, as "horizontal error" is smaller, the positioning accuracy is higher, and the positioning result having the smallest "horizontal error" is desirable.

The GPS positioning unit 133 performs the GPS positioning to obtain a positioning result including the position of the mobile terminal 100 and the measurement status regarding the current GPS based positioning. Specifically, in response to an activation instruction from the positioning determination unit 132, the GPS positioning unit 133 performs the GPS based positioning and provides the positioning result output unit 135 with the obtained positioning result as the positioning result of the current positioning. As stated above, in the typical GPS based positioning, GPS signals are received from three or more GPS satellites 300, and the position of the mobile terminal 100 is determined in any known GPS positioning method based on the received GPS signals.

As stated above, there is a possibility that the GPS based positioning unit 133 may have failed the GPS based positioning in an area where the GPS signals cannot be successfully received such as an indoor environment. Specifically, if no positioning result has been obtained for a predefined period and accordingly the GPS based positioning has timed out, the GPS positioning unit 133 may determine that it has failed the current GPS based positioning. Alternatively, if a horizontal error estimated for the positioning result of the current GPS based positioning exceeds a predefined threshold, the GPS positioning unit 133 may determine that it has failed the current GPS based positioning. If the GPS based positioning has been unsuccessful, the GPS positioning unit 133 reports the failure of the GPS based positioning to the positioning determination unit 132. Upon receipt of the failure of the GPS based positioning, the positioning determination unit 132 instructs the base station based positioning unit 134 to activate the base station based positioning.

The base station based positioning unit 134 performs the base station based positioning to obtain a positioning result including the position of the mobile terminal 100 and the measurement status regarding the current base station based positioning. Specifically, in response to an activation instruction from the positioning determination unit 132, the base station based positioning unit 134 performs the base station based positioning and provides the positioning result output unit 135 with the obtained positioning result as the positioning result of the current positioning. As stated above, in the typical base station based positioning, the position of the mobile terminal 100 is measured based on the strength of signals received from the base station 200.

The positioning result output unit 135 provides the communication unit 110 with positioning results received from the positioning determination unit 132, the GPS based positioning unit 133 and the base station based positioning unit 134 and transmits the positioning results to service providers via the communication unit 110. Also, the positioning result output unit 135 registers the positioning results received from the positioning determination unit 132, the GPS based positioning unit 133 and the base station based positioning unit 134 with the historical positional information in the historical positional information storage unit 131.

The above-stated functional elements in the mobile terminal 100 may be implemented in hardware, software or a combination thereof. For example, the positioning unit 130 may be implemented as an application, an operating system or middleware.

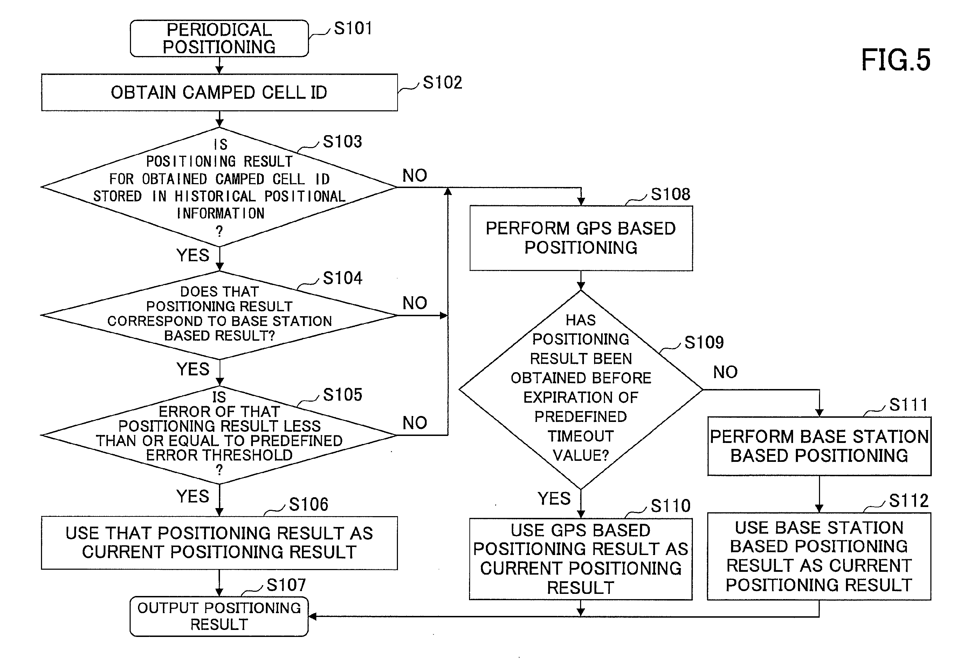

Next, an operation in a mobile terminal according to one embodiment of the present invention is described. FIG. 5 is a flow diagram for illustrating periodic positioning in a mobile terminal according to one embodiment of the present invention. The periodic positioning is performed by the positioning unit 130 in the above-stated mobile terminal 100.

As illustrated in FIG. 5, at step S101, the positioning unit 130 initiates the periodic positioning in accordance with an activation instruction provided from the positioning activation unit 120 in response to an occurrence of a predefined event.

At step S102, the positioning unit 130 obtains a camped cell ID for identifying a camped cell from the communication unit 110.

At step S103, the positioning determination unit 132 searches the historical positional information storage unit 131 for the stored historical positional information and determines whether a positioning result corresponding to the camped cell ID is in the historical positional information. If the corresponding positioning result has been detected (S103: YES), the flow proceeds to step S104. On the other hand, if the corresponding positioning result has not been detected (S103: NO), the flow proceeds to step S108.

At step S104, the positioning determination unit 132 determines whether "type of positioning" of the detected positioning result is the base station based positioning. If it is the base station based positioning (S104: YES), the flow proceeds to step S105. On the other hand, if it is not the base station based positioning (S104: NO), the flow proceeds to step S108.

At step S105, the positioning determination unit 132 determines whether "horizontal error" of the detected positioning result is less than or equal to a predefined error threshold. If "horizontal error" is less than or equal to the predefined error threshold (S105: YES), the flow proceeds to step S106. On the other hand, if "horizontal error" is greater than the predefined error threshold (S105: NO), the flow proceeds to step S108.

At step S106, the positioning determination unit 132 does not perform the GPS based positioning and the base station based positioning and provides the positioning result output unit 135 with the detected positioning result as the positioning result of the current positioning. If multiple positioning results have been found, the positioning determination unit 132 may provide the positioning result output unit 135 with the positioning result having the smallest "horizontal error", that is, the positioning result having the highest positioning accuracy, as the positioning result of the current positioning.

At step S107, the positioning result output unit 135 transmits the provided positioning result to the service provider via the communication unit 110 and registers it with the historical positional information in the historical positional information storage unit 131.

At step S108, the positioning determination unit 132 instructs the GPS positioning unit 133 to activate the GPS based positioning, and in turn the GPS based positioning unit 133 performs the GPS based positioning.

At step S109, the GPS based positioning unit 133 determines whether a positioning result has been obtained within a predefined period. If the GPS based positioning unit 133 has obtained the positioning result within the predefined period (S109: YES), the flow proceeds to step S110. On the other hand, if the GPS based positioning unit 133 has failed to obtain the positioning result within the predefined period (S109: NO), the GPS based positioning unit 133 reports the failure of the GPS based positioning to the positioning determination unit 132, and the flow proceeds to step S111.

At step S110, the GPS based positioning unit 133 provides the positioning result output unit 135 with the obtained positioning result as the current positioning result.

At step S111, the positioning determination unit 132 instructs the base station based positioning unit 134 to activate the base station based positioning, and in turn the base station based positioning unit 134 performs the base station based positioning.

At step S112, the base station based positioning unit 134 provides the positioning result output unit 135 with the obtained positioning result as the current positioning result.

The above embodiments are particularly advantageous to positioning for areas where the GPS system cannot be successfully utilized, but an indoor base station is disposed, such as an office, an underground mall and a subway platform.

The specific embodiments of the present invention have been described above, but the present invention is not limited to the above-stated specific embodiments, and variations and modifications can be made by those skilled in the art without deviating from the spirit of the present invention.

This international patent application is based on Japanese Priority Application No. 2011-275054 filed on December 15, 2011, the entire contents of which are hereby incorporated by reference.

### LIST OF REFERENCE SYMBOLS

- 100: mobile terminal
- 110: communication unit
- 120: positioning activation unit
- 130: positioning unit
- 131: historical positional information storage unit
- 132: positioning determination unit
- 133: GPS based positioning unit
- 134: base station based positioning unit
- 135: positioning result output unit
- 200: base station
- 300: GPS satellite

## Claims

1. A mobile terminal having a positioning function, comprising:
a GPS positioning unit configured to perform GPS based positioning to obtain a positioning result including a position of the mobile terminal and a measurement status regarding the GPS based positioning;
a base station based positioning unit configured to perform base station based positioning to obtain a positioning result including a position of the mobile terminal and a measurement status regarding the base station based positioning;
a historical positional information storage unit configured to store historical positional information including the positioning results obtained by the GPS based positioning unit and the base station based positioning unit; and
a positioning determination unit configured to determine whether a valid positioning result regarding a camped base station of the mobile terminal is in the historical positional information,
wherein when positioning is performed for the mobile terminal in response to activation of the positioning function, prior to activation of the GPS based positioning and the base station based positioning, the positioning determination unit identifies the camped base station of the mobile terminal, identifies positioning results regarding the identified base station in the historical positional information, detects a valid positioning result from the identified positioning results based on the measurement status of the identified positioning results and provides the detected positioning result as the positioning result for the mobile terminal.

2. The mobile terminal as claimed in claim 1, wherein the measurement status relates to one or more of a positioning timing, a positioning type, positioning accuracy and a positioning point of the GPS based positioning and/or the base station based positioning, and the positioning determination unit determines validity of the positioning results based on one or more of information elements associated with the positioning timing, the positioning type, the positioning accuracy and the positioning point.

3. The mobile terminal as claimed in claim 2, further comprising:
a communication unit configured to receive an identifier for identifying the base station from the base station,
wherein the communication unit transmits the positioning result for the mobile terminal to the base station and receives contents related to the position of the mobile terminal from the base station.

4. The mobile terminal as claimed in claim 3, wherein the positioning determination unit determines the validity of the positioning results depending on the size of a geographical area covered by the position related contents.

5. The mobile terminal as claimed in claim 2, wherein upon detecting multiple valid positioning results from the historical positional information, the positioning determination unit provides a positioning result having the highest positioning accuracy among the detected positioning results as the positioning result for the mobile terminal.

6. The mobile terminal as claimed in claim 1, wherein upon determining that no valid positioning result is in the historical positional information, the positioning determination unit causes the GPS based positioning unit to perform the GPS based positioning, and the GPS based positioning unit provides the positioning result obtained through the GPS based positioning as the positioning result for the mobile terminal.

7. The mobile terminal as claimed in claim 6, wherein when the GPS based positioning unit has failed the GPS based positioning, the positioning determination unit causes the base station based positioning unit to perform the base station based positioning, and the base station based positioning unit provides the positioning result obtained through the base station based positioning as the positioning result for the mobile terminal.

8. The mobile terminal as claimed in claim 1, further comprising:
a positioning activation unit configured to periodically activate the positioning function.

9. The mobile terminal as claimed in claim 8, further comprising:
a motion detection device for detecting motion of the mobile terminal,
wherein in response to the motion detection device detecting that the mobile terminal is currently moving, the positioning activation unit periodically activates the positioning function.

10. A method for performing a positioning function in a mobile terminal, wherein the mobile terminal includes historical positional information for recording a positioning result including a position of the mobile terminal obtained through previous positioning and a measurement status regarding the positioning, the method comprising:
activating the positioning function in response to an occurrence of a predefined event;
identifying a camped base station of the mobile terminal;
identifying positioning results regarding the identified base station in the historical positional information;
detecting a valid positioning result from the identified positioning results based on the measurement status of the identified positioning results; and
outputting the detected positioning result as the positioning result for the mobile terminal.
